# EUROPÄISCHE PATENTSCHRIFT

(11) **EP 3 269 167 B1**
(45) Veröffentlichungstag und Bekanntmachung des Hinweises auf die Patenterteilung: **14.09.2022**
(21) Anmeldenummer: 16709701.3
(22) Anmeldetag: 09.03.2016
(51) Int. Cl.: H04W 12/06, H04W 12/30, H04W 8/18, H04L 9/40

(54) **NETZWERKZUGANGSUNTERSTÜTZUNG**
NETWORK ACCESS SUPPORT
ASSISTANCE D'ACCÈS RÉSEAU

(30) Priorität: 11.03.2015 DE 102015003079
(43) Veröffentlichungstag der Anmeldung: 17.01.2018
(73) Patentinhaber: Giesecke+Devrient Mobile Security GmbH, 81677 München (DE)
(72) Erfinder: WIMBÖCK, Ulrich, 82327 Tutzing (DE)
(74) Vertreter: Giesecke + Devrient IP
(86) Internationale Anmeldenummer: PCT/EP2016/000424
(87) Internationale Veröffentlichungsnummer: WO 2016/142064

(56) Entgegenhaltungen:
- EP-A1- 2 182 750
- DE-A1-102013 013 178
- US-A1- 2006 182 042
- US-A1- 2009 253 409
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.2.0, 22. Juni 2010 (2010-06-22), Seiten 1-87, XP050441986, [gefunden am 2010-06-22]

## Beschreibung

Die vorliegende Erfindung betrifft ein Verfahren zum Unterstützen eines Zugangs eines Endgeräts zu einem Mobilfunknetzwerk. Weiter betrifft die Erfindung ein Sicherheitselement für ein Endgerät mit einer entsprechenden Zugangsunterstützungs-Applikation, einen entsprechenden Zugangsunterstützungs-Server sowie ein System mit einem solchen Sicherheitselement und einem solchen Zugangsunterstützungs-Server.

Die Authentisierung eines Endgeräts eines Teilnehmers gegenüber einem Mobilfunknetzwerk zum Zugang zu dem Mobilfunknetzwerk erfolgt derzeit in der Regel über ein so genanntes Challenge-Response-Verfahren. Dabei empfängt das Endgerät, nachdem der Teilnehmer anhand einer Netzwerkteilnehmerkennung, die auf einem Sicherheitselement (SIM, UICC) des Endgeräts gespeichert ist, und die an den Server des Mobilfunknetzwerks übertragen wird, von dem Server eine Zufallszahl, verschlüsselt diese Zufallszahl mittels eines in dem Endgerät gespeicherten, teilnehmerindividuellen und geheimen Authentisierungsschlüssels, und überträgt das Ergebnis an den Server. Dort ist ebenfalls der Authentisierungsschlüssel des Teilnehmers gespeichert, so dass der Server die Berechnung seinerseits durchführen und das Ergebnis mit dem von dem Endgerät empfangenen Ergebnis vergleichen kann. Bei Übereinstimmung der Ergebnisse gilt das Endgerät als authentifiziert.

Das explizite gesicherte Speichern solcher Authentisierungsschlüssel oder vergleichbarer, zum Bestimmen von Authentisierungsdaten erforderlicher Datensätze im Sicherheitselement des Endgeräts bringt einige Nachteile mit sich. In der Regel ist ein Authentisierungsschlüssel fest an eine Subskription, d.h. eine vertragliche Vereinbarung des Teilnehmers mit einem Betreiber des Mobilfunknetzwerks, gebunden. Daher kann eine lediglich temporäre Verwendung einer Subskription oder die parallele Verwendung verschiedener Subskriptionen auf einem Sicherheitselement mit der beschrieben Lösung nur schwer unterstützt werden. Allgemein wird das so genannte "Life Cycle Management" des Sicherheitselements erschwert, wenn darauf Authentisierungsschlüssel oder dergleichen fest gespeichert werden müssen.

Zum Überwinden der genannten Probleme sind Lösungen bekannt, bei denen ein Authentisierungsschlüssel oder vergleichbare Daten nicht mehr lokal im Sicherheitselement des Endgeräts gespeichert werden, sondern auf einem externen Server, z.B. einem so genannten SIM-Server (vgl. z.B. WO 2011/158207 A1). Beim Authentisieren des Endgeräts gegenüber dem Mobilfunknetzwerk leitet dann das Endgerät die vom Server des Mobilfunknetzwerks empfangene Zufallszahl an den SIM-Server weiter. Dort wird die Zufallszahl mittels des dem Teilnehmer zugeordneten geheimen Schlüssels, der nun beim SIM-Server und nicht mehr im Sicherheitselement des Endgeräts gespeichert ist, verschlüsselt. Das Ergebnis wird vom SIM-Server an das Endgerät übertragen und vom Endgerät an den Server des Mobilfunknetzwerks weitergeleitet. Auf diese Weise kann auf die explizite Speicherung von Authentisierungsschlüsseln oder dergleichen in dem Sicherheitselement des Endgeräts verzichtet werden. Auch wird es möglich, verschiedene Subskriptionen parallel oder einzelne Subskriptionen nur temporär zu verwenden.

Nachteilig an der zuletzt beschriebenen Lösung ist allerdings, dass das Endgerät des Teilnehmers zum Authentisieren gegenüber dem Mobilfunknetzwerk stets eine Verbindung zum SIM-Server aufbauen muss. D.h. der SIM-Server muss für das Endgerät verlässlich und dauerhaft verfügbar sein. Auch ist es notwendig, dass die Kommunikationsverbindung zwischen dem Endgerät und dem SIM-Server eine Datenkommunikation mit hinreichender Geschwindigkeit zuverlässig ermöglicht. Ansonsten können gegebenenfalls Timing-Vorgaben des Authentisierungsvorgangs zwischen dem Endgerät und dem Server des Mobilfunknetzwerks nicht eingehalten werden.

Aus der US 2009/253409 A1 ist ein Verfahren zur Anmeldung eines Endgerätes (wireless device) bei einem Mobilfunknetzwerk bekannt, das sicherstellt, dass sensible Daten nur zwischen dem Endgerät und dem gewünschten Mobilfunknetzwerk ausgetauscht werden. Erreicht wird dies mittels eines Registrierungsservers, der als "trusted party" agiert. In einem vorgelagerten Schritt werden durch den Hersteller vorläufige Schlüssel und Identifikationsdaten in den Registrierungsserver und in das Endgerät geladen. Für die Anmeldung des Endgerätes bei dem Mobilfunknetzwerk übermittelt der Registrierungsserver diesem einen der vorläufigen Schlüssel mit Identifikationsdaten. Denselben vorläufigen Schlüssel mit Identifikationsdaten übermittelt der Registrierungsserver in einer Erstkontaktphase an das Endgerät. Mittels des vorläufigen Schlüssels und der Identifikationsdaten authentisiert sich das Endgerät anschließend bei dem Mobilfunknetzwerk.

DE 102013013178 A1 offenbart ein Verfahren zur Anbindung eines Endgerätes an ein Mobilfunknetzwerk. Im Endgerät ist dazu ein erstes Subskriptionsprofil bereitgestellt. Mittels des Subskriptionsprofils verbindet sich das Endgerät mit einem Mobilfunknetzwerk und über dieses mit einem Subskriptionsverwaltungsserver. Von dem Subskriptionsverwaltungsserver erhält das Endgerät ein weiteres Subskriptionsprofil. Das Endgerät wird so betrieben, dass stets nur ein Subskriptionsprofil aktiv ist.

Aus der EP 2182750 A1 ist ein Verfahren zur Registrierung einer Smart Card bei einem Mobilfunknetzwerk entnehmbar. In dem Dokument 3GPP TR 33.812, Nr. V9 2.0 (XP0504441986) werden Maßnahmen zur Gewährleistung der Sicherheit bei der Fernverwaltung von Subskriptionen im Bereich Machine to Machine beschrieben.

Aufgabe der vorliegenden Erfindung ist es, den beschriebenen Problemen des Standes der Technik Rechnung zu tragen und ein Verfahren und System vorzuschlagen, welche eine Authentisierung eines Endgeräts gegenüber einem Mobilfunknetzwerk unterstützen.

Diese Aufgabe wird durch ein Verfahren gemäß Anspruch 1, ein Sicherheitselement gemäß Anspruch 11 für ein Endgerät mit einer Zugangsunterstützungs-Applikation, einen Zugangsunterstützungs-Server gemäß Anspruch 13 und ein System gemäß Anspruch 15 gelöst. Vorteilhafte Ausgestaltungen und Weiterbildungen sind in den abhängigen Ansprüchen angegeben.

Eine bevorzugte Ausführungsform eines Verfahren in einem System, welches einen ersten Server eines Mobilfunknetzwerks und einen mit dem ersten Server verbundenen Zugangsunterstützungsserver umfasst, umfasst die nachfolgend beschriebenen Schritte.

In dem ersten Server des Mobilfunknetzwerks wird eine Mehrzahl von Authentisierungsdatensätzen für eine vorgegebene Netzwerkteilnehmerkennung erzeugt. Der erste Server kann dabei einem Server eines Heimatortre gisters ("Home Location Register", HLR) des Mobilfunknetzwerkes entsprechen. Als Netzwerkteilnehmerkennung kann beispielsweise eine IMSI ("International Mobile Subscriber Identity" - im Zusammenhang eines GSM Netzwerkes) - oder eine IMPI ("IP Multimedia Private Identity" - im Zusammenhang mit einem IP basierten Netzwerk) verwendet werden. Die Erzeugung der Authentisierungsdaten, die nachfolgend noch genauer spezifiziert wird, kann dabei von einem der Netzwerkteilnehmerkennung zugeordneten Authentisierungsschlüssel abhängen, der dann in gesicherter Weise in dem ersten Server gespeichert ist.

Der erste Server speichert die Mehrzahl der zu der vorgegebenen Netzwerkteilnehmerkennung erzeugten Authentisierungsdatensätze und überträgt eine Kopie der Mehrzahl der Authentisierungsdatensätze an den Zugangsunterstützungs-Server.

Beispielsweise in Reaktion auf eine Authentisierungsanfrage eines Endgerätes zur Authentisierung gegenüber einem Mobilfunknetzwerk, wird dann in einem weiteren Schritt eine Authentisierungsinformation eines Endgeräts, welchem die vorgegebene Netzwerkteilnehmerkennung zugewiesen ist, anhand eines ausgewählten Authentisierungsdatensatzes aus der Mehrzahl der Authentisierungsdatensätze durch einen Authentifizierungs-Server des Mobilfunknetzwerkes geprüft. Als "Authentisierungsinformation" wird im Zusammenhang mit der Erfindung allgemein ein Datensatz verstanden, welchen das Endgerät an den Authentifizierungs-Server des Mobilfunknetzwerks sendet, um sich zu authentisieren.

Das Verfahren zeichnet sich dadurch aus, dass dem Endgerät eine vorgegebene Netzwerkteilnehmerkennung durch den Zugangsunterstützungs-Server zugewiesen wird. Der Zugangsunterstützungs-Server leitet diese dem Endgerät zugewiesene Netzwerkteilnehmerkennung auch an den ersten Server des Mobilfunknetzwerkes weiter, damit dieser, wie vorstehend erwähnt, zu der vorgegebenen Netzwerkteilnehmerkennung die Mehrzahl der Authentisierungsdatensätze erzeugen kann. Gemäß einer bevorzugten Variante kann der erste Server der ihm übermittelten, vorgegebenen Netzwerkteilnehmerkennung einen vorstehend bereits erwähnten geheimen Authentisierungs-Schlüssel zuordnen, welcher zur Erzeugung der Mehrzahl der Authentisierungsdatensätze dient und welcher zusammen mit der Netzwerkteilnehmerkennung bei dem ersten Server des Mobilfunknetzwerkes gespeichert wird.

Der Zugangsunterstützungs-Server leitet auch eine Kopie der von dem ersten Server empfangenen Mehrzahl der Authentisierungsdatensätze an das Endgerät weiter. In dem Endgerät kann diese Mehrzahl der Authentisierungsdatensätze zusammen mit der im Schritt des Zuweisens empfangenen vorgegebenen Netzwerkteilnehmerkennung, beispielsweise in einem Sicherheitselement des Endgeräts, gespeichert werden.

Für den Schritt des Prüfens der Authentisierungsinformation des Endgeräts durch den Authentifizierungs-Server des Mobilfunknetzwerkes wird dem Authentifizierungs-Server des Mobilfunknetzwerks, entweder durch den ersten Server oder durch den Zugangsunterstützungs-Server, zumindest der ausgewählte Authentisierungsdatensatz zu der vorgegebenen Netzwerkteilnehmerkennung bereitgestellt. Weiterhin empfängt der Authentifizierungs-Server die Authentisierungsinformation von demjenigen Endgerät, welchem im Schritt des Zuweisens die vorgegebene Netzwerkteilnehmerkennung zugewiesen und welchem im Schritt des Weiterleitens die Kopie der Mehrzahl der Authentisierungsdatensätze weitergeleitet worden ist.

Das Endgerät kann sich folglich gemäß dem vorstehend beschriebenen Verfahren gegenüber einem Authentifizierungs-Server eines Mobilfunknetzwerkes allein auf Basis der zuvor von dem Zugangsunterstützungs-Server zugewiesenen Netzwerkteilnehmerkennung und der empfangenen Mehrzahl der Authentisierungsdatensätze authentisieren. Die vorbereitenden Schritte, das heißt des Zuweisen der Netzwerkteilnehmerkennung und das Übertragen der Mehrzahl der Authentisierungsdatensätze von dem Zugangsunterstützungs-Server zu dem Endgerät, erfordern lediglich eine einmalige Datenkommunikation zwischen dem Zugangsunterstützungs-Server und dem Endgerät. Diese Datenkommunikation kann über ein beliebiges Datenkommunikationsnetzwerk und zu einem beliebigen Zeitpunkt durchgeführt werden. Zu dem Zeitpunkt, zu dem sich das Endgerät gegenüber einem Mobilfunknetzwerk authentisiert, ist grundsätzlich keine Datenkommunikation zwischen dem Endgerät und dem Zugangsunterstützungs-Server mehr notwendig. Auf diese Weise wird ein Zugang des Endgeräts zu dem Mobilfunknetzwerk auf einfache Weise ermöglicht.

In der Regel wird sich ein Teilnehmer, der einen Zugang zu einem oder mehreren Mobilfunknetzwerken anstrebt, vorab einmalig bei dem Zugangsunterstützungs-Server registrieren. Dabei wird die Identität des Teilnehmers festgestellt und es werden Zugangsdaten in ein Sicherheitselement des Endgeräts des Teilnehmers eingebracht, welche anschließend von dem Endgerät verwendet werden können, um eine Authentisierung gegenüber dem Zugangsunterstützungs-Server vorzunehmen. Ein solcher Schritt des Authentisierens des Endgeräts gegenüber dem Zugangsunterstützungs-Server wird in der Regel vor dem Schritt des Zuweisens der vorgegebenen Netzwerkteilnehmerkennung zu dem Endgerät erfolgen.

In dem Zugangsunterstützungs-Server können für den einmal registrierten Teilnehmer eine oder mehrere Subskriptionen angelegt werden. Eine Subskription entspricht dabei im Wesentlichen einer Vertragsbeziehung zwischen dem Teilnehmer und einem Betreiber eines Mobilfunknetzwerkes, welche durch den Zugangsunterstützungs-Server technisch verwaltet wird, und welche den Zugang des Endgeräts zu einem der Subskription zugeordneten Mobilfunknetzwerk regelt. Jeder solchen Subskription wird dabei vorzugsweise eine spezifische Netzwerkteilnehmerkennung zugewiesen.

Es ergibt sich unmittelbar, dass mittels des vorstehend beschriebenen Verfahrens auf einfache Weise und durch den Zugangsunterstützungs-Server verwaltet eine Subskription auch lediglich temporär oder parallel zu weiteren Subskriptionen verwendet werden kann. Auf dem entsprechenden Endgerät des Teilnehmers, bzw. in dem Sicherheitselement des Endgeräts, können dabei in gesicherter Weise parallel verschiedene Netzwerkteilnehmerkennungen jeweils zusammen mit einer der Netzwerkteilnehmerkennung zugeordneten Mehrzahl von Authentisierungsdaten gespeichert und verwaltet werden. Dazu kann auf dem Sicherheitselement eine nachstehend noch im Detail beschriebene Zugangsunterstützungs-Applikation installiert sein. Wenn der Teilnehmer mittels seines Endgeräts nun Zugang zu einem Mobilfunknetzwerk erhalten möchte, kann er, sind für den Teilnehmer mehrere Subskriptionen angelegt, manuell oder automatisch, nach einstellbaren Kriterien, mittels der Zugangsunterstützungs-Applikation, eine Subskription, d.h. auch ein Mobilfunknetzwerk als Heimnetzwerk, auswählen.

Gemäß einer ersten bevorzugten Variante des Verfahrens stellt der erste Server des Mobilfunknetzwerks, welches in der Regel dem Heimnetzwerk der aktuell ausgewählten Subskription entspricht, dem Authentifizierungs-Server des Mobilfunknetzwerkes, in welchem sich das Endgerät angemeldet hat, den ausgewählten Authentisierungsdatensatz bereit. Nachdem sich das Endgerät bei dem Mobilfunknetzwerk, gegenüber welchem es sich authentisieren möchte, angemeldet hat, beispielsweise durch Übertragen der dem Endgerät zugewiesenen Netzwerkteilnehmerkennung, identifiziert das Mobilfunknetzwerk, gegebenenfalls nach Rückfrage bei dem entsprechenden Heimnetzwerk, das Endgerät anhand der Netzwerkteilnehmerkennung.

Auf Basis dieser Netzwerkteilnehmerkennung kann nun der erste Server des der Subskription zugeordneten Heimnetzwerks die zu der Netzwerkteilnehmerkennung gespeicherte Mehrzahl von Authentisierungsdatensätzen heranziehen und daraus einen Authentisierungsdatensatz auswählen. Dieser ausgewählte Authentisierungsdatensatz wird dann an den Authentifizierungs-Server des Mobilfunknetzwerkes, bei dem sich das Endgerät angemeldet hat, übertragen. Dies kann ein Authentifizierungs-Server des Heimnetzwerkes oder ein Authentifizierungs-Server eines Fremdnetzwerkes sein.

Gemäß einer zweiten bevorzugten Variante des Verfahrens kann der Zugangsunterstützungs-Server für den Schritt des Prüfens der Authentisierungsinformation des Endgerätes dem entsprechenden Authentifizierungs-Server des Mobilfunknetzwerkes, bei dem sich das Endgerät angemeldet hat, den Authentisierungsdatensatz bereitstellen. In gewisser Weise spielt dabei der Zugangsunterstützungs-Server in dieser zweiten bevorzugten Variante die Rolle des ersten Servers in der zuvor beschriebenen ersten bevorzugten Variante.

Dazu ist der Zugangsunterstützungs-Server eingerichtet, eine Authentisierungsanfrage des Endgerätes bei einem Mobilfunknetzwerk zu erkennen. Anhand der während des Anmeldens übertragenen Netzwerkteilnehmerkennung kann der Zugangsunterstützungs-Server die zu der übertragenen Netzwerkteilnehmerkennung gespeicherte Mehrzahl von Authentisierungsdatensätzen heranziehen und daraus ebenfalls einen Authentisierungsdatensatz auswählen. Dieser ausgewählte Authentisierungsdatensatz wird dann von dem Zugangsunterstützungs-Server an den entsprechenden Authentifizierungs-Server weitergeleitet. Der Authentifizierungs-Server kann dabei entweder in dem der Subskription zugeordneten Heimnetzwerk angeordnet sein oder in einem Fremdnetzwerk.

Gemäß einer weiteren bevorzugten Ausführungsform des Verfahrens kann der Zugangsunterstützungs-Server als Personalisierungseinheit für ein Endgerät fungieren. Im Schritt des Zuweisens wird dem Endgerät dabei durch den Zugangsunterstützungs-Server eine temporäre initiale Netzwerkteilnehmerkennung zugewiesen. Der erste Server des Mobilfunknetzwerkes, welches in diesem Fall als Heimnetzwerk dient, erzeugt für die initiale temporäre Netzwerkteilnehmerkennung zumindest einige Authentisierungsdatensätze. Das Endgerät kann dann bei einer ersten Inbetriebnahme in dem Mobilfunknetzwerk eine erste Authentisierungsanfrage an das Mobilfunknetzwerk auf Basis der initialen temporären Netzwerkteilnehmerkennung stellen. Diese erste Authentisierungsanfrage dient in der Regel dazu, einen Zugang zu dem Mobilfunknetzwerk zu erhalten, um über diesen Zugang eine oder mehrere herkömmliche Netzwerkteilnehmerkennungen zu erhalten. Mit anderen Worten wird das Endgerät bzw. das Sicherheitselement des Endgeräts erst nach dem einmaligen Zugang zu dem Mobilfunknetzwerk für den eigentlichen Betrieb personalisiert.

Ein vorstehend mehrfach erwähnter Authentisierungsdatensatz kann grundsätzlich auf beliebige geeignete Art und Weise ausgebildet sein. Bevorzugt besteht ein solcher Authentisierungsdatensatz aus einem Datensatzpaar, bestehend aus einem Index und einem dem Index zugeordneten Prüfwert. Der Index dient dabei dazu, den Authentisierungsdatensatz eindeutig in der Mehrzahl der Authentisierungsdatensätze zu identifizieren. Der Prüfwert dient dem Endgerät dazu, sich gegenüber dem Authentifizierungs-Server zu authentisieren und dem Authentifizierungs-Server dient der Prüfwert dazu, das Endgerät zu authentifizieren. Index und Prüfwert können dabei auch als "Challenge" und "Response" angesehen werden.

Grundsätzlich kann das Endgerät zum Authentisieren gegenüber dem Authentifizierungs-Server lediglich in Antwort auf einen empfangenen Index den dem Index zugeordneten Prüfwert, als Authentisierungsinformation, übertragen. Es ist jedoch auch möglich, dass das Endgerät, in Antwort auf einen empfangenen Index, mittels des dem Index zugeordneten Prüfwertes eine Authentisierungsinformation berechnet und diese Authentisierungsinformation zum Authentisieren an den Authentifizierungs-Server überträgt.

Eine bevorzugte Ausführungsform eines Sicherheitselements für ein Endgerät umfasst eine Zugangsunterstützungs-Applikation zum Unterstützen eines Zugangs zu zumindest einem Mobilfunknetzwerk. Die Zugangsunterstützungs-Applikation ist dabei eingerichtet, eine Authentisierung des Sicherheitselements gegenüber einem Zugangsunterstützungs-Server durchzuführen. Dazu kann das Sicherheitselement entsprechende Zugangsdaten, beispielsweise Zugangsschlüssel, umfassen, welche im Rahmen einer Registrierung des Sicherheitselements bei dem Zugangsunterstützungs-Server in das Sicherheitselement eingebracht worden sind.

Die Zugangsunterstützens-Applikation ist weiterhin eingerichtet, eine Netzwerkteilnehmerkennung und eine Mehrzahl von Authentisierungsdatensätzen zu dieser Netzwerkteilnehmerkennung von einem Zugangsunterstützungs-Server zu empfangen und in gesicherter Weise zu verwalten. In der Regel wird einem solchen Empfangen entsprechender Daten ein Antrag der Zugangsunterstützungs-Applikation bei dem Zugangsunterstützungs-Server vorausgehen, in welchem diese Daten angefordert werden.

Die Zugangsunterstützungs-Applikation ist schließlich eingerichtet, auf Basis der Netzwerkteilnehmerkennung und der Mehrzahl der Authentisierungsdatensätze des Sicherheitselements das Endgerätes gegenüber einem Mobilfunknetzwerk in der vorstehend beschriebenen Weise zu authentisieren, um dadurch einen Zugang zu dem Mobilfunknetzwerk zu erhalten.

Das Sicherheitselement kann dabei grundsätzlich fest in dem Endgerät installiert sein, beispielsweise in Form eines so genannten "trusted execution environments" (TEE), oder als ein entfernbar in das Endgerät integriertes Sicherheitselement vorliegen, beispielsweise als gesicherte Speicherkarte oder dergleichen.

Die Zugangsunterstützungs-Applikation kann weiterhin eingerichtet sein, mehrere verschiedene Netzwerkteilnehmerkennungen, und zu jeder dieser Netzwerkteilnehmerkennungen jeweils eine Mehrzahl von Authentisierungsdatensätzen von dem Zugangsunterstützungs-Server zu empfangen und gleichzeitig gesichert zu verwalten. Weiterhin kann die Zugangsunterstützungs-Applikation eingerichtet sein, sich auf Basis dieser verschiedenen Netzwerkteilnehmerkennungen und der den verschiedenen Netzwerkteilnehmerkennungen jeweils zugeordneten Mehrzahl von Authentisierungsdatensätzen gegenüber mehreren verschiedenen Mobilfunknetzwerken zu authentisieren. Auf diese Weise wird die parallele Verwendung verschiedener Subskriptionen durch das Endgerät unterstützt.

Eine bevorzugte Ausführungsform eines Zugangsunterstützungs-Servers zur Unterstützung eines Sicherheitselements eines Endgerätes beim Zugang zu einem Mobilfunknetzwerk ist vorzugsweise eingerichtet, mit einem ersten Server des Mobilfunknetzwerks verbunden zu werden und ein Sicherheitselement eines Endgeräts in einer vorstehend beschriebenen Weise zu authentifizieren. Der Zugangsunterstützungs-Server ist weiterhin eingerichtet, dem Sicherheitselement eine Netzwerkteilnehmerkennung zuzuordnen und die Netzwerkteilnehmerkennung an den ersten Server weiterzuleiten.

Von dem ersten Server kann der Zugangsunterstützungs-Server dann eine Mehrzahl von Authentisierungsdatensätzen zu der Netzwerkteilnehmerkennung empfangen und diese Mehrzahl der Authentisierungsdatensätze zusammen mit der Netzwerkteilnehmerkennung an das Sicherheitselement des Endgerätes übertragen. Bevorzugt ist der Zugangsunterstützungs-Server weiterhin eingerichtet, die von dem ersten Server zu der zuvor weitergeleiteten Netzwerkteilnehmerkennung empfangene Mehrzahl von Authentisierungsdatensätzen auch selbst zusammen mit der Netzwerkteilnehmerkennung zu speichern.

Gemäß einer bevorzugten Variante ist der Zugangsunterstützungs-Server weiterhin eingerichtet, dem Sicherheitselement des Endgerätes verschiedene Netzwerkteilnehmerkennungen zuzuweisen und jeweils eine der verschiedenen Netzwerkteilnehmerkennungen an einen ersten Server eines Mobilfunknetzwerks aus einer Menge verschiedener Mobilfunknetzwerke weiterzuleiten. Folglich ist der Zugangsunterstützungs-Server weiterhin eingerichtet, eine von einem der ersten Server zu der dem ersten Server weitergeleiteten Netzwerkteilnehmerkennung jeweils empfangene Mehrzahl von Authentisierungsdatensätzen zusammen mit der dem ersten Server weitergeleiteten Netzwerkteilnehmerkennung an das Sicherheitselement des Endgerätes zu übertragen - und auch selbst zu speichern.

Ein bevorzugte Variante eines erfindungsgemäßes Systems schließlich umfasst zumindest ein Mobilfunknetzwerk, ein vorstehend beschriebenes Sicherheitselement für ein Endgerät mit einer Zugangsunterstützungs-Applikation der beschriebenen Art, einen vorstehend beschriebenen Zugangsunterstützungs-Server, welche jeweils eingerichtet sind, ein vorstehend beschriebenes Verfahren durchzuführen.

Die vorliegende Erfindung wird im Folgenden mit Bezug auf die beiliegenden Zeichnungen beispielhaft beschrieben. Darin zeigen:
- Figur 1: Komponenten einer bevorzugten Ausführungsform eines erfindungsgemäßen Systems;
- Figur 2: vorbereitende Schritte einer bevorzugten Ausführungsform eines Verfahrens zum Unterstützen eines Zugangs zu einem Mobilfunknetzwerk, umfassend eine Registrierung eines Endgerätes bei einem Zugangsunterstützungs-Server und eine Authentisierung des Endgerätes gegenüber dem Zugangsunterstützungs-Server, wobei das Endgerät für eine Authentisierung gegenüber einem Mobilfunknetzwerk vorbereitet wird;
- Figur 3: Schritte des Verfahrens zur Unterstützen eines Zugangs zu einem Mobilfunknetzwerk, umfassend ein Anmelden des Endgerätes bei dem Mobilfunknetzwerk und ein Authentifizieren des Endgerätes durch einen Authentifizierungs-Server; und
- Figuren 4 und 5: Varianten des Verfahrens nach Figur 3.

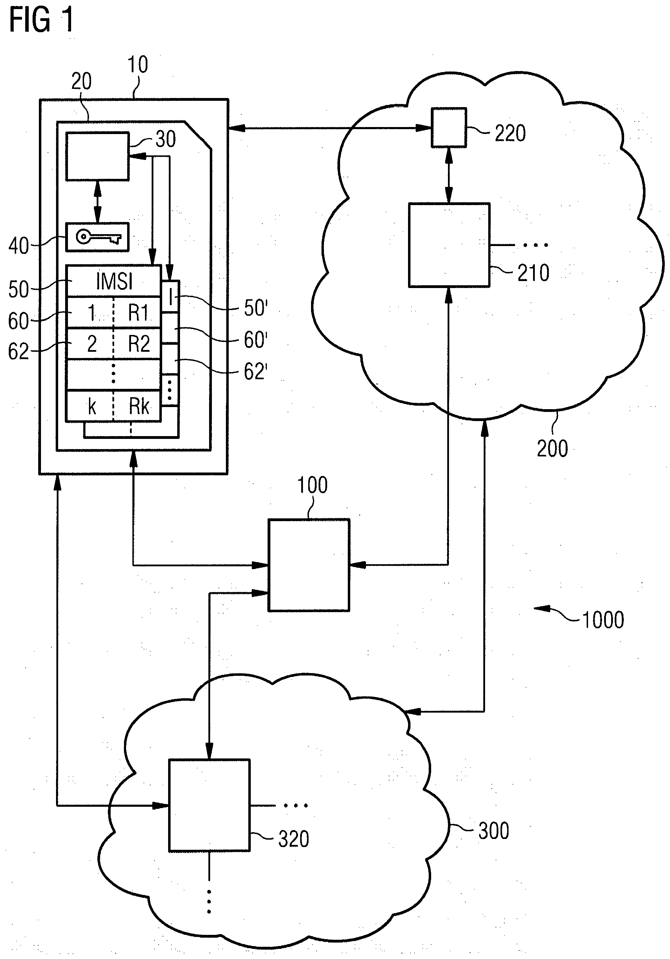

Ein System 1000, welches in Figur 1 schematisch dargestellt ist, umfasst ein erstes Mobilfunknetzwerk 200, ein weiteres Mobilfunknetzwerk 300, einen Zugangsunterstützungs-Server 100 sowie ein Endgerät 10.

Das Endgerät 10 umfasst ein Sicherheitselement 20. Das Sicherheitselement 20 umfasst eine nachfolgend im Detail beschriebene Zugangsunterstützungs-Applikation 30. Diese ist eingerichtet, auf Authentisierungsdaten 40 zuzugreifen, mittels welcher sich das Endgerät 10 gegenüber dem Zugangsunterstützungs-Server 100 authentisieren kann. Die Zugangsunterstützungs-Applikation 30 ist weiterhin eingerichtet, auf in dem Endgerät 10 gespeicherte Netzwerkteilnehmerkennungen 50, 50' (z.B. eine IMSI) sowie einer Netzwerkteilnehmerkennung 50, 50' jeweils zugeordnete Authentisierungsdatensätze 60, 60' in nachstehend beschriebener Weise zuzugreifen.

Die Netzwerkteilnehmerkennung 50 und die Mehrzahl der Authentisierungsdatensätze 60 dienen dabei in ebenfalls nachstehend beschriebener Weise einer Authentisierung des Endgerätes 10 gegenüber einem Mobilfunknetzwerk 200, 300.

Jede der in dem Sicherheitselement 20 des Endgeräts 10 gespeicherten Netzwerkteilnehmerkennungen 50, 50' ist dabei einer Subskription zugeordnet, d.h. einer Vertragsbindung des Nutzers des Endgerätes 10 gegenüber einem Betreiber eines Mobilfunknetzwerks 200, 300. Im nachstehend beschriebenen Verfahren sei das Mobilfunknetzwerk 200 das Heimnetzwerk zu der Subskription, welcher die Netzwerkteilnehmerkennung 50 zugeordnet ist. Folglich ist für diese Subskription das Mobilfunknetzwerk 300 als Fremdnetzwerk anzusehen.

Das Mobilfunknetzwerk 200 umfasst einen ersten Server 210. Dieser erste Server 210 kann beispielsweise ein Server eines Heimatortregisters (HLR) des Mobilfunknetzwerks 200 sein. Der erste Server 210 ist eingerichtet, zu einer vorgegebenen Netzwerkteilnehmerkennung 50, welche der erste Server 210, wie nachstehend beschrieben, von dem Zugangsunterstützungs-Server 100 empfangen kann, eine Mehrzahl von Authentisierungsdatensätzen 60, beispielsweise in Form von "Challenge-Response"-Paaren, zu erzeugen und zusammen mit der einzelnen Netzwerkteilnehmerkennung 50 zu speichern. Der Server 210 ist weiterhin eingerichtet, die erzeugte Mehrzahl der Authentisierungsdatensätze 60 an den Netzwerkunterstützung-Server 100 zu übertragen.

Der Netzwerkunterstützungs-Server 100 seinerseits ist eingerichtet, die empfangene Mehrzahl von Authentisierungsdatensätzen 60 zusammen mit der entsprechenden Netzwerkteilnehmerkennung 50 zu speichern und eine Kopie der Mehrzahl der Authentisierungsdatensätze 60 zusammen mit der Netzwerkteilnehmerkennung 50 an das Endgerät 10 zu übertragen.

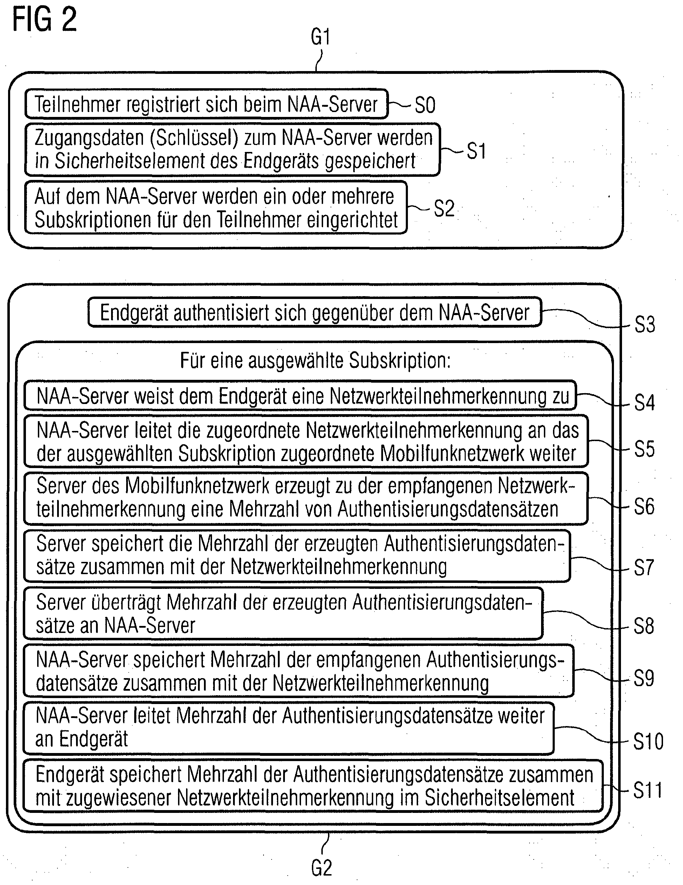

Das Mobilfunknetzwerk 200 und das Mobilfunknetzwerk 300 umfassen weiterhin jeweils einen Authentifizierungs-Server 220, 320, welche eingerichtet sind, ein Endgerät 10 auf Basis eines zuvor empfangenen Authentisierungsdatensatzes zu authentifizieren. Details eines entsprechenden Verfahrens werden nun im Folgenden mit Bezug auf die Figuren 2 bis 5 dargelegt.

In Figur 2 sind Schritte beschrieben, welche vorbereitend durchzuführen sind, um einem Endgerät 10 einen Zugang zu einem Mobilfunknetzwerk 200, 300 zu ermöglichen. Die Schritte S0 bis S2 der Gruppe G1 dienen dazu, ein Endgerät 10 bzw. ein Sicherheitselement 20 des Endgerätes 10 bei einem Zugangsunterstützungs-Server 100 (NAA-Server, "network access application"-Server) zu registrieren.

Die Schritte S3 bis S11 der Gruppe G2 dienen dann dazu, das Endgerät 10 durch den Zugangsunterstützungs-Server 100 auf eine Anmeldung bei einem Mobilfunknetzwerk 200, 300 vorzubereiten.

In Schritt S0 registriert sich ein Teilnehmer, das heißt ein Nutzer eines Endgerätes 10, bei dem Zugangsunterstützungs-Server 100. Dabei wird in der Regel von einem Betreiber des Zugangsunterstützungs-Servers 100 die Identität des Teilnehmers festgestellt.

In Schritt S1 werden Zugangsdaten, vorzugsweise ein Zugangsschlüssel 40 (vgl. Figur 1), in dem Sicherheitselement 20 des Endgeräts 10 gespeichert. Auf Basis dieser Zugangsdaten 40 kann sich das Endgerät 10, wie in Schritt S3 angedeutet, gegenüber dem Zugangsunterstützungs-Server 100 authentisieren.

In Schritt S2 schließlich werden in dem Zugangsunterstützungs-Server 100 für den Teilnehmer ein oder mehrere Subskriptionen eingerichtet. Jede dieser Subskriptionen entspricht im Wesentlichen einer vertraglichen Vereinbarung hinsichtlich einer Nutzung eines Mobilfunknetzwerkes 200, 300 durch den Teilnehmer mittels des Endgerätes 10.

Nach erfolgreicher Registrierung kann sich das Endgerät 10, wie in Schritt S3 angegeben, gegenüber dem Zugangsunterstützungs-Server 100 authentisieren. Es kann dabei eine gesicherte Datenkommunikationsverbindung zwischen dem Endgerät 10, bzw. dem Sicherheitselement 20 des Endgeräts 10, und dem Zugangsunterstützungs-Server 100 aufgebaut werden.

Für jede in Schritt S2 eingerichtete Subskription können dann die Schritte S4 bis S11 durchgeführt werden.

In Schritt S4 weist der Zugangsunterstützungs-Server 100 dem Endgerät 10 zu der ausgewählten Subskription eine Netzwerkteilnehmerkennung 50 zu. Eine solche Netzwerkteilnehmerkennung 50 kann dabei zum Beispiel einer aus dem GSM-Umfeld bekannten IMSI entsprechen. Allerdings wird diese Netzwerkteilnehmerkennung dem Endgerät 10 durch den Zugangsunterstützungs-Server 100 lediglich temporär, d.h. für die Dauer der Subskription, zugeordnet. Ist das vertragliche Verhältnis abgelaufen, kann die Netzwerkteilnehmerkennung 50 durch den Zugangsunterstützungs-Server 100 weiter verwendet werden, und beispielsweise einem anderen Teilnehmer/Endgerät zugewiesen werden.

In Schritt S5 leitet der Zugangsunterstützungs-Server 100 die dem Endgerät 10 zugewiesene Netzwerkteilnehmerkennung 50 an das der ausgewählten Subskription zugeordnete Mobilfunknetzwerk 200 weiter, welches als das Heimnetzwerk zu der Subskription angesehen werden soll.

Der erste Server 210 des Heimnetzwerks 200 erzeugt in Schritt S6 zu der empfangenen Netzwerkteilnehmerkennung eine Mehrzahl von Authentisierungsdatensätzen. Dazu kann der Server 210 einen beim Server 210 gespeicherten Authentisierungsschlüssel der Netzwerkteilnehmerkennung 50 zuordnen. Dieser Authentisierungsschlüssel kann dann zum Erzeugen der Mehrzahl der Authentisierungsdatensätze 60 verwendet werden.

In Schritt S7 speichert der Server 210 die Mehrzahl der erzeugten Authentisierungsdatensätze 60 zusammen mit der zuvor empfangenen Netzwerkteilnehmerkennung 50.

Der Server 210 überträgt in Schritt S8 die Mehrzahl der erzeugten Authentisierungsdatensätze 60 an den Zugangsunterstützungs-Server 100, welcher diese in Schritt S9 zusammen mit der Netzwerkteilnehmerkennung 50 ebenfalls speichert.

In Schritt S10 leitet der Zugangsunterstützungs-Server 10 eine Kopie der Mehrzahl der Authentisierungsdatensätze 60 an das Endgerät 10 weiter. Das Endgerät 10 speichert in Schritt S11 die Mehrzahl der empfangenen Authentisierungsdatensätze 60 zusammen mit der zugewiesenen Netzwerkteilnehmerkennung 50 in dem Sicherheitselement 20.

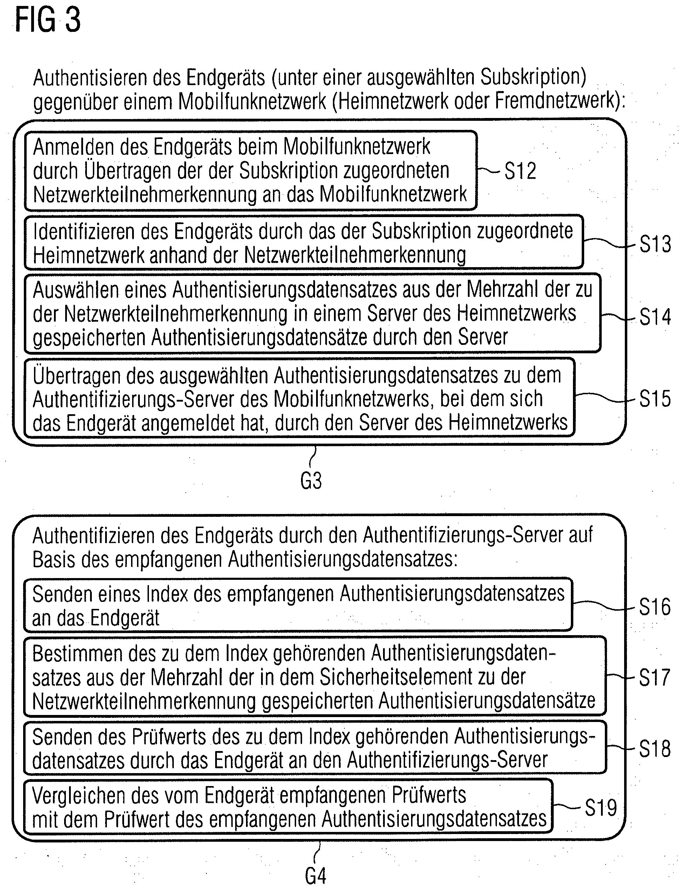

Das Endgerät 10 ist nun vollständig eingerichtet, sich gegenüber einem Mobilfunknetzwerk 200, 300 zu authentisieren. Ein solcher Authentisierungsvorgang wird nachfolgend mit Bezug auf Figur 3 beschrieben.

Die Schritte des Authentisierungsvorgangs sind dabei wiederum in zwei Gruppen G3 und G4 unterteilt. Die Schritte der Gruppe G3 geben an, wie sich das Endgerät 10 bei dem Mobilfunknetzwerk 200, 300 anmeldet und wie der Authentifizierungs-Server des Mobilfunknetzwerkes 200, 300 den Authentisierungsdatensatz empfängt, auf Basis dessen er das Endgerät 10 authentifiziert.

Die Schritte der Gruppe G4 schließlich beschreiben eine spezifische Ausführungsform eines Authentifizierungs-Verfahrens zwischen Endgerät 10 und Authentifizierungs-Server 220, 320.

In Schritt S12 meldet sich das Endgerät 10 bei dem Mobilfunknetzwerk 200, 300 durch Übertragen der der aktuell ausgewählten Subskription zugeordneten Netzwerkteilnehmerkennung 50 bei dem Mobilfunknetzwerk 200, 300 an. Das Mobilfunknetzwerk 200, 300 kann dabei dem Heimnetzwerk 200 oder einem Fremdnetzwerk 300 entsprechen. Das Endgerät 10 wird seitens des Mobilfunknetzwerks 200, 300 in Schritt S13 anhand der empfangenen Netzwerkteilnehmerkennung 50 identifiziert. In dem Fall, dass sich das Endgerät 10 bei einem Fremdnetzwerk 300 angemeldet hat, werden von Fremdnetzwerk 30 entsprechende Informationen bei dem Heimnetzwerk 200 in grundsätzlich bekannter Weise eingeholt.

Das der Subskription zugeordnete Heimnetzwerk 200, d.h. der erste Server 210 des Heimnetzwerks 200, welcher in jedem Falle Kenntnis von der Anmeldung des Endgerätes 10 bei dem Mobilfunknetzwerk 200, 300 erhält, wählt in Schritt S14 einen Authentisierungsdatensatz 62 aus der Mehrzahl der zu der Netzwerkteilnehmerkennung gespeicherten Authentisierungsdatensätze 60 aus (vgl. Figur 2, Schritt S7).

In Schritt S15 überträgt der erste Server 210 des Heimnetzwerkes 200 den ausgewählten Authentisierungsdatensatz 62 zu dem Authentifizierungs-Server 220, 320 des Mobilfunknetzwerks 200, 300, bei dem sich das Endgerät 10 angemeldet hat.

Der jeweilige Authentifizierungs-Server 220, 320 ist nun in der Lage, wie mit Bezug auf die Schritte S16 bis S19 nachfolgend beschrieben, das Endgerät 10 zu authentifizieren.

Dazu sendet der Authentifizierung-Server 220, 320 in Schritt S16 den Index des empfangenen Authentisierungsdatensatzes an das Endgerät 10. Der Authentisierungsdatensatz umfasst dabei einen Index und einen dem Index zugeordneten Prüfwert.

Das Endgerät 10 bestimmt in Schritt S17 den zu dem Index gehörenden Authentisierungsdatensatz 62 aus der Mehrzahl der in dem Sicherheitselement 20 des Endgeräts 10 zu der Netzwerkteilnehmerkennung 50 gespeicherten Authentisierungsdatensätze (vgl. Figur 2, Schritt S11).

In Schritt S18 sendet das Endgerät 10 den Prüfwert des zu dem Index gehörenden Authentisierungsdatensatzes an den Authentifizierung-Server 220, 320. Dieser vergleicht schließlich in Schritt S19 den von dem Endgerät 10 empfangenen Prüfwert mit dem Prüf wert des von dem ersten Server 210 in Schritt S15 empfangenen Authentisierungsdatensatzes 62. Stimmen die beiden Prüfwerte überein, so gilt das Endgerät 10 als erfolgreich authentifiziert.

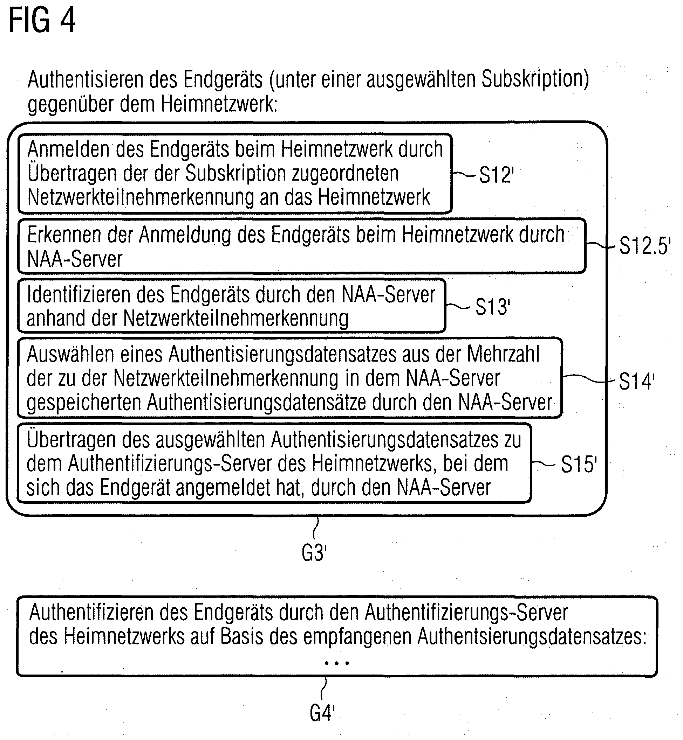

Das in Figur 4 dargestellte Verfahren ist dem Verfahren aus Figur 3 sehr ähnlich. Im Unterschied zu dem Verfahren aus Figur 3 erfolgt eine Authentisierung des Endgerätes 10 gemäß dem Verfahren in Figur 4 explizit bei dem Heimnetzwerk 200.

Der wesentliche Unterschied des Verfahrens nach Figur 4 im Vergleich zum Verfahren nach Figur 3 besteht darin, dass nicht der erste Server 210 des Mobilfunknetzwerks 200, sondern der Zugangsunterstützungs-Server 100 den Authentifizierungsdatensatz 62, welcher zur Authentifizierung des Endgerätes 10 herangezogen wird, auswählt und an den Authentifizierungs-Server 220 sendet.

Dies wird dadurch ermöglicht, dass der Zugangsunterstützungs-Server 100 eingerichtet ist, wie mit Bezug auf Schritt S12.5' dargestellt, eine Anmeldung des Endgeräts 10 bei dem Heimnetzwerk 200 zu erkennen, beispielsweise anhand der seitens des Endgerätes 10 dem Heimnetzwerk 200 übertragenen Netzwerkteilnehmerkennung 50. In an sich bekannter Weise kann der Zugangsunterstützungs-Server 100 den entsprechenden Datenaustausch mithören und/oder abfangen. Anhand dieser Netzwerkteilnehmerkennung 50 kann der Zugangsunterstützung-Server 100, wie mit Bezug auf Schritt S13' dargestellt, das Endgerät 10 identifizieren und in Schritt S14' einen Authentisierungsdatensatz 62 aus der Mehrzahl der zu der Netzwerkteilnehmerkennung 50 in dem Zugangsunterstützungs-Server 100 gespeicherten Authentisierungsdatensätze 60 auswählen (vgl. Figur 2, Schritt S9).

In Schritt S15' überträgt der Zugangsunterstützungs-Server 100 den ausgewählten Authentisierungsdatensatz 62 an den Authentifizierungs-Server 220 des Heimnetzwerks 200.

Die Schritte der Gruppe G4 verlaufen dann in dem Verfahren gemäß Figur 4 analog zum Verfahren aus Figur 3 und sind daher nicht mehr im Detail ausgeführt.

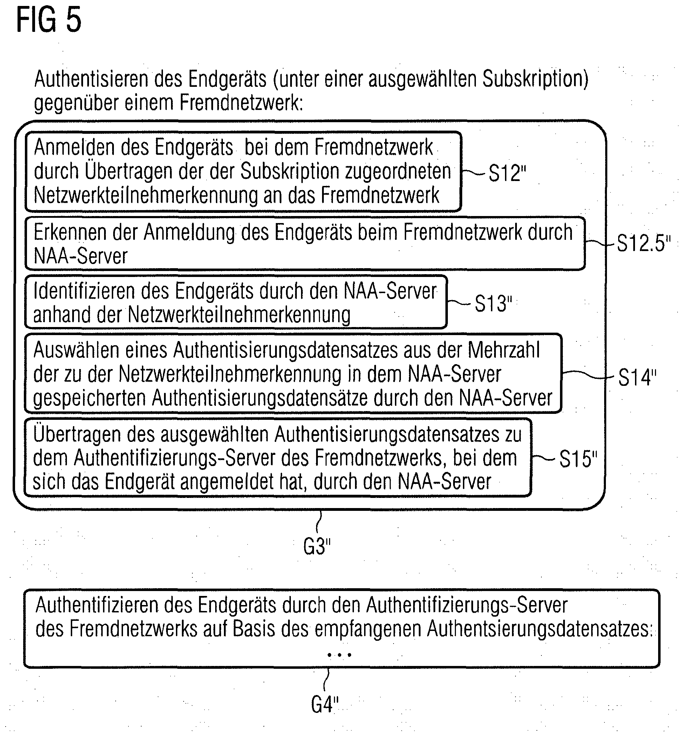

Das Verfahren nach Figur 5 unterscheidet sich von dem Verfahren aus Figur 4 im Wesentlichen lediglich darin, dass sich das Endgerät 10 nicht gegenüber dem Heimnetzwerk 200, sondern gegenüber einem Fremdnetzwerk 300 anmeldet.

Der Zugangsunterstützungs-Server 100 ist ebenfalls eingerichtet, wie in Schritt S12.5" angedeutet, eine solche Anmeldung des Endgerätes 10 in einem Fremdnetzwerk 300 zu erkennen und das Endgerät 10 auf Basis der an das Fremdnetzwerk 300 übertragenen Netzwerkteilnehmerkennung 50 zu identifizieren. In an sich bekannter Weise kann der Zugangsunterstützungs-Server 100 den entsprechenden Datenaustausch mithören und gegebenenfalls abfangen.

Die restlichen Schritte des Verfahrens nach Fig. 5 verlaufen dabei analog zu dem Verfahren aus Figur 4, mit dem Unterschied, dass der Zugangsunterstützungs-Server 100 den ausgewählten Authentisierungsdatensatz 62 nicht an den Authentifizierungs-Server 220 des Heimnetzwerkes 200, sondern an einen Authentifizierungs-Server 320 des Fremdnetzwerks 300 überträgt.

## Patentansprüche

1. Verfahren in einem System (1000), umfassend einen ersten Server (210) eines Mobilfunknetzwerks (200) und einen Zugangsunterstützungs-Server (100), wobei das Verfahren folgende Schritte umfasst:
- Speichern (S7) einer Mehrzahl von Authentisierungsdatensätzen zu einer vorgegebenen Netzwerkteilnehmerkennung (50) in dem ersten Server (210);
- - Prüfen (G4) einer Authentisierungsinformation eines Endgeräts (10) mit der vorgegebenen Netzwerkteilnehmerkennung (50) anhand eines ausgewählten Authentisierungsdatensatzes (62) aus der Mehrzahl der Authentisierungsdatensätze (60) durch einen Authentifizierungs-Server (220),
- Zuweisen (S4) der vorgegebenen Netzwerkteilnehmerkennung (50) zu dem Endgerät (10) durch den Zugangsunterstützungs-Server (100), wobei die Netzwerkteilnehmerkennung (50) dem Endgerät (10) durch den Zugangsunterstützungs-Server (100) für die Dauer einer Subskription, zugeordnet wird, wobei die Subskription die Nutzung des Mobilfunknetzwerkes (200) regelt;
- Erzeugen (S6) einer Mehrzahl von Authentisierungsdatensätzen (60) für die vorgegebene Netzwerkteilnehmerkennung (50) in dem ersten Server (210)
- Übertragen (S8) der Mehrzahl der Authentisierungsdatensätze (60) von dem ersten Server (210) an den Zugangsunterstützungs-Server (100);
- Weiterleiten (S10) der Mehrzahl der Authentisierungsdatensätze (60) vom dem Zugangsunterstützungs-Server (100) an das Endgerät (10),
wobei für den Schritt des Prüfens (G4) der Authentisierungsinformation des Endgeräts (10) dem Authentifizierungs-Server (220) zumindest der ausgewählte Authentisierungsdatensatz (62) bereitgestellt wird und der Authentifizierungs-Server (220) die Authentisierungsinformation von dem Endgerät (10) empfängt, welchem die vorgegebene Netzwerkteilnehmerkennung (50) zugewiesen und an welches die Mehrzahl der Authentisierungsdatensätze (60) weitergeleitet worden ist.

2. Verfahren nach Anspruch 1, **gekennzeichnet durch** den weiteren Schritt des
- Authentisierens (S3) des Endgeräts (10) gegenüber dem Zugangsunterstützungs-Server (100) vor dem Schritt des Zuweisens (S4) der vorgegebenen Netzwerkteilnehmerkennung (50) zu dem Endgerät (10).

3. Verfahren nach Anspruch 1 oder 2, **dadurch gekennzeichnet, dass** für den Schritt des Prüfens (G4) der Authentisierungsinformation des Endgeräts (10) der erste Server (210) dem Authentifizierungs-Server (220) zumindest den ausgewählten Authentisierungsdatensatz (62) bereitstellt.

4. Verfahren nach Anspruch 1 oder 2, **dadurch gekennzeichnet, dass** für den Schritt des Prüfens (G4) der Authentisierungsinformation des Endgeräts (10) der Zugangsunterstützungs-Server (100) dem Authentifizierungs-Server (220) zumindest den ausgewählten Authentisierungsdatensatz (62) bereitstellt.

5. Verfahren nach Anspruch 4, **dadurch gekennzeichnet, dass** der Zugangsunterstützungs-Server (100) eine Authentisierungsanfrage des Endgeräts (10) bei einem Mobilfunknetzwerk (200; 300) anhand der vorgegebenen Netzwerkteilnehmerkennung (50) erkennt und daraufhin, für den Schritt des Prüfens (G4) der Authentisierungsinformation des Endgeräts (10), einem Authentifizierungs-Server (220; 320) des Mobilfunknetzwerks (200; 300) als dem Authentifizierungs-Server den ausgewählten Authentisierungsdatensatz (62) bereitstellt.

6. Verfahren nach Anspruch 5, **dadurch gekennzeichnet, dass** der Zugangsunterstützungs-Server (100) eine Authentisierungsanfrage des Endgeräts (100) bei einem Heimnetzwerk (200) anhand der vorgegebenen Netzwerkteilnehmerkennung (50) erkennt und daraufhin, für den Schritt des Prüfens (G4) der Authentisierungsinformation des Endgeräts (10), dem Authentifizierungs-Server (220) des Heimnetzwerks (200) den ausgewählten Authentisierungsdatensatz (62) bereitstellt.

7. Verfahren nach Anspruch 5, **dadurch gekennzeichnet, dass** der Zugangsunterstützungs-Server (100) eine Authentisierungsanfrage des Endgeräts (10) bei einem Fremdnetzwerk (300) anhand der vorgegebenen Netzwerkteilnehmerkennung (50) erkennt und daraufhin, für den Schritt des Prüfens (G4) der Authentisierungsinformation des Endgeräts (10), dem Authentifizierungs-Server (320) des Fremdnetzwerks (300) den ausgewählten Authentisierungsdatensatz (62) bereitstellt.

8. Verfahren nach Anspruch 1 oder 2, **dadurch gekennzeichnet, dass** der Zugangsunterstützungs-Server (100) als Personalisierungseinheit für ein Endgerät (10) fungiert und dem Endgerät (10) im Schritt des Zuweisens (S4) eine initiale temporäre Netzwerkteilnehmerkennung zuweist, der erste Server (210) eine Mehrzahl von initialen Authentisierungsdatensätzen für die initiale temporäre Netzwerkteilnehmerkennung erzeugt, und das Endgerät bei einer ersten Inbetriebnahme in einem Mobilfunknetzwerk eine erste Authentisierungsanfrage bei dem Mobilfunknetzwerk auf Basis der initialen temporären Netzwerkteilnehmerkennung und der initialen Authentisierungsdatensätze stellt.

9. Verfahren nach einem der Ansprüche 1 bis 8, **dadurch gekennzeichnet, dass** der erste Server (210) des Mobilfunknetzwerks (200) ein Server eines Heimatortregisters des Mobilfunknetzwerks (200) ist

10. Verfahren nach einem der Ansprüche 1 bis 9, **dadurch gekennzeichnet, dass** als ein Authentisierungsdatensatz (60) ein Datensatzpaar, bestehend aus einem Index und einem dem Index zugeordneten Prüfwert, erzeugt wird.

11. Sicherheitselement (20) für ein Endgerät (10) mit Zugangsunterstützungs-Applikation (30) zur Unterstützung eines Zugangs zu zumindest einem Mobilfunknetzwerk (200; 300), wobei die Nutzung des Mobilfunknetzwerkes (200; 300) durch eine Subskription geregelt ist,
wobei die Zugangsunterstützungs-Applikation (30) eingerichtet ist,
- eine Authentisierung des Sicherheitselements (20) gegenüber einem Zugangsunterstützungs-Server (100) durchzuführen,
- von dem Zugangsunterstützungs-Server (100) eine für die Dauer der Subskription zugeordnete Netzwerkteilnehmerkennung (50) und eine Mehrzahl von Authentisierungsdatensätzen (60) zu dieser Netzwerkteilnehmerkennung (50) zu empfangen und gesichert zu verwalten; und
- anhand eines von einem Authentifizierungs-Server (220, 320) des Mobilfunknetzwerkes (200, 300) empfangenen Indices einen zugehörigen Authentisierungsdatensatz (62) aus der Mehrzahl der Authentisierungsdatensätze (60) zu bestimmen,
- auf Basis der zugeordneten Netzwerkteilnehmerkennung (50) und des zu dem Index gehörenden Authentisierungsdatensatzes (62) das Sicherheitselement (20) gegenüber einem Mobilfunknetzwerk (200; 300) zu authentisieren.

12. Sicherheitselement (20) nach Anspruch 11, **dadurch gekennzeichnet, dass** die Zugangsunterstützungs-Applikation (30) eingerichtet ist, mehrere verschiedene Netzwerkteilnehmerkennungen (50; 50') und zu jeder dieser Netzwerkteilnehmerkennungen (50; 50') jeweils eine Mehrzahl von Authentisierungsdatensätzen (60; 60') von dem Zugangsunterstützungs-Server (100) zu empfangen und gesichert zu verwalten, und eingerichtet ist, sich auf Basis dieser verschiedenen Netzwerkteilnehmerkennungen (50; 50') und der den verschiedenen Netzwerkteilnehmerkennungen (50; 50') jeweils zugeordneten Mehrzahl von Authentisierungsdatensätzen (60; 60') gegenüber mehreren verschiedenen Mobilfunknetzwerken (200; 300) zu authentisieren.

13. Zugangsunterstützungs-Server (100) zur Unterstützung eines Sicherheitselements (20) beim Zugang zu einem Mobilfunknetzwerk (200; 300), wobei die Nutzung des Mobilfunknetzwerkes (200; 300) durch eine Subskription geregelt ist, wobei der Zugangsunterstützungs-Server (100) eingerichtet ist,
- mit einem ersten Server (210) des Mobilfunknetzwerks (200) verbunden zu werden;
- ein Sicherheitselement (20) eines Endgeräts (10) zu authentifizieren;
- dem Sicherheitselement (20) für die Dauer der Subskription eine Netzwerkteilnehmerkennung (50) zuzuordnen und die Netzwerkteilnehmerkennung (50) an den ersten Server (210) weiterzuleiten;
- von dem ersten Server (210) eine Mehrzahl von Authentisierungsdatensätzen (60) zu der Netzwerkteilnehmerkennung (50) zu empfangen und
- die Mehrzahl der Authentisierungsdatensätze (60) zusammen mit der zugeordneten Netzwerkteilnehmerkennung (50) an das Sicherheitselement (20) des Endgeräts (10) zu übertragen.

14. Zugangsunterstützungs-Server (100) nach Anspruch 13, **dadurch gekennzeichnet, dass** der Zugangsunterstützungs-Server (100) eingerichtet ist, dem Sicherheitselement (20) verschiedene Netzwerkteilnehmerkennungen (50; 50') zuzuordnen und jeweils eine der verschiedenen Netzwerkteilnehmerkennungen (50; 50') an einen ersten Server (210) eines Mobilfunknetzwerkes (200) aus einer Menge verschiedener Mobilfunknetzwerke (200; 300) weiterzuleiten, und eingerichtet ist, eine vom einem der ersten Server (210) zu der dem ersten Server (210) weitergeleiteten Netzwerkteilnehmerkennung (50) jeweils empfangene Mehrzahl von Authentisierungsdatensätzen (60) zusammen mit der dem ersten Server (210) weitergeleiteten Netzwerkteilnehmerkennung (50) an das Sicherheitselement (20) des Endgeräts (10) zu übertragen.

15. System (1000), umfassend ein Mobilfunknetzwerk (200; 300), ein Sicherheitselement (20) für ein Endgerät (10) nach Anspruch 11 oder 12 sowie einen Zugangsunterstützungs-Server (100) nach Anspruch 13 oder 14, welche eingerichtet sind, ein Verfahren nach einem der Ansprüche 1 bis 10 durchzuführen.

## Claims

1. A method in a system (1000) comprising a first server (210) of a mobile communication network (200) and an access support server (100), wherein the method comprises the following steps of:
- storing (S7) a plurality of authentication data sets for a predetermined network subscriber identifier (50) in the first server (210);
- checking (G4) an authentication information item of a terminal (10) with the predetermined network subscriber identifier (50) by means of a selected authentication data set (62) from the plurality of authentication data sets (60) by an authentication server (220),
- assigning (S4) the predetermined network subscriber identifier (50) to the terminal (10) by the access support server (100), wherein the network subscriber identifier (50) is allocated to the terminal (10) by the access support server (100) for the duration of a subscription, wherein the subscription regulates the use of the mobile communication network (200);
- generating (S6) a plurality of authentication data sets (60) for the predetermined network subscriber identifier (50) in the first server (210);
- transferring (S8) the plurality of authentication data sets (60) from the first server (210) to the access support server (100);
- forwarding (S10) the plurality of authentication data sets (60) from the access support server (100) to the terminal (10),
wherein for the step of checking (G4) the authentication information item of the terminal (10) the authentication server (220) is provided with at least the selected authentication data set (62) and the authentication server (220) receives the authentication information item from the terminal (10) to which the predetermined network subscriber identifier (50) has been assigned and to which the plurality of authentication data sets (60) have been forwarded.

2. The method according to claim 1, **characterized by** the further step of authenticating (S3) the terminal (10) vis-à-vis the access support server (100) prior to the step of assigning (S4) the predetermined network subscriber identifier (50) to the terminal (10).

3. The method according to claim 1 or 2, **characterized in that** for the step of checking (G4) the authentication information item of the terminal (10), the first server (210) provides the authentication server (220) with at least the selected authentication data set (62).

4. The method according to claim 1 or 2, **characterized in that** for the step of checking (G4) the authentication information item of the terminal (10), the access support server (220) provides the authentication server (220) with at least the selected authentication data set (62).

5. The method according to claim 4, **characterized in that** the access support server (100) detects an authentication request of the terminal (10) to a mobile communication network (200; 300) by means of the predetermined network subscriber identifier (50) and in response, for the step of checking (G4) the authentication information item of the terminal (10), provides an authentication server (220; 320) of the mobile communication network (200; 300) as the authentication server with the selected authentication data set (62).

6. The method according to claim 5, **characterized in that** the access support server (100) detects an authentication request of the terminal (10) to a home network (200) by means of the predetermined network subscriber identifier (50) and in response, for the step of checking (G4) the authentication information item of the terminal (10), provides the authentication server (220) of the home network (200) with the selected authentication data set (62).

7. The method according to claim 5, **characterized in that** the access support server (100) detects an authentication request of the terminal (10) to a foreign network (300) by means of the predetermined network subscriber identifier (50) and in response, for the step of checking (G4) the authentication information item of the terminal (10), provides the authentication server (320) of the foreign network (300) with to the selected authentication data set (62).

8. The method according to claim 1 or 2, **characterized in that** the access support server (100) functions as a personalization unit for a terminal (10) and, in the step of assigning (S4), assigns to the terminal (10) an initial temporary network subscriber identifier, the first server (210) generates a plurality of initial authentication data sets for the initial temporary network subscriber identifier, and the terminal, upon a first activation in a mobile communication network, makes a first authentication request to the mobile communication network on the basis of the initial temporary network subscriber identifier and the initial authentication data sets.

9. The method according any of claims 1 to 8, **characterized in that** the first server (210) of the mobile communication network (200) is a server of a home location register of the mobile communication network (200).

10. The method according to any of claims 1 to 9, **characterized in that,** as an authentication data set (60), a pair of data sets is generated which is composed of an index and a check value allocated to the index.

11. A security element (20) for a terminal (10) with an access support application (30) for supporting an access to at least one mobile communication network (200; 300), wherein the use of the mobile communication network (200; 300) is regulated by a subscription,
wherein the access support application (30) is adapted to
- carry out an authentication of the security element (20) vis-à-vis an access support server (100),
- receive from the access support server (100) and securely manage a network subscriber identifier (50) allocated for the duration of the subscription and a plurality of authentication data sets (60) for this network subscriber identifier (50); and
- determine an associated authentication data set (62) out of the plurality of authentication data sets (60) on the basis of indices received from an authentication server (220; 320) of the mobile communication network (200; 300),
- authenticate the security element (20) vis-à-vis a mobile communication network (200; 300) on the basis of the allocated network subscriber identifier (50) and the authentication data set (62) associated with the index.

12. The security element (20) according to claim 11, **characterized in that** the access support application (30) is adapted to receive from the access support server (100) and to securely manage several different network subscriber identifiers (50; 50') and respectively a plurality of authentication data sets (60; 60') relating in each case to these network subscriber identifiers (50; 50'), and is adapted to authenticate itself vis-à-vis several different mobile communication networks (200; 300) on the basis of these different network subscriber identifiers (50; 50') and the plurality of authentication data sets (60; 60') allocated in each case to the different network subscriber identifiers (50; 50').

13. An access support server (100) for supporting a security element (20) during accessing a mobile communication network (200; 300), wherein the use of the mobile communication network (200; 300) is regulated by a subscription, wherein the access support server (100) is adapted to,
- be connected to a first server (210) of the mobile communication network (200);
- authenticate a security element (20) of a terminal (10);
- allocate to the security element (20) a network subscriber identifier (50) for the duration of the subscription and to forward the network subscriber identifier (50) to the first server (210);
- receive from the first server (210) a plurality of authentication data sets (60) for the network subscriber identifier (50) and
- transfer the plurality of authentication data sets (60) together with the allocated network subscriber identifier (50) to the security element (20) of the terminal (10).

14. The access support server (100) according to claim 13, **characterized in that** the access support server (100) is adapted to allocate different network subscriber identifiers (50; 50') to the security element (20) and to forward in each case one of the different network subscriber identifiers (50; 50') to a first server (210) of a mobile communication network (200) from a number of different mobile communication networks (200; 300), and is adapted to transfer to the security element (20) of the terminal (10) a plurality of authentication data sets (60) respectively received by one of the first servers (210) in connection with the network subscriber identifier (50) forwarded to the first server (210), together with the network subscriber identifier (50) forwarded to the first server (210).

15. A system (1000) comprising a mobile communication network (200; 300), a security element (20) for a terminal (10) according to claim 11 or 12, as well as an access support server (100) according to claim 13 or 14, which are adapted to carry out a method according to any of the claims 1 to 10.

## Revendications

1. Procédé dans un système (1000) comprenant un premier serveur (210) d'un réseau de téléphonie mobile (200) et un serveur d'assistance d'accès (100), cependant que le procédé comprend les étapes suivantes :
- mémorisation (S7) d'une pluralité de jeux de données d'authentification relativement à un identifiant prédéterminé d'abonné au réseau (50) dans le premier serveur (210) ;
- vérification (G4) d'une information d'authentification d'un terminal (10) avec l'identifiant prédéterminé d'abonné au réseau (50) au moyen d'un jeu de données d'authentification (62) sélectionné parmi la pluralité des jeux de données d'authentification (60) par un serveur d'authentification (220),
- affectation (S4) de l'identifiant prédéterminé d'abonné au réseau (50) au terminal (10) par le serveur d'assistance d'accès (100), cependant que l'identifiant d'abonné au réseau (50) est associé au terminal (10) par le serveur d'assistance d'accès (100) pour la durée d'un abonnement, cependant que l'abonnement règle l'utilisation du réseau de téléphonie mobile (200) ;
- génération (S6) d'une pluralité de jeux de données d'authentification (60) pour l'identifiant prédéterminé d'abonné au réseau (50) dans le premier serveur (210)
- transmission (S8) de la pluralité des jeux de données d'authentification (60) du premier serveur (210) au serveur d'assistance d'accès (100) ;
- transfert (S10) de la pluralité des jeux de données d'authentification (60) du serveur d'assistance d'accès (100) au terminal (10),
cependant que, pour l'étape de la vérification (G4) de l'information d'authentification du terminal (10), au moins le jeu de données d'authentification (62) sélectionné est mis à la disposition du serveur d'authentification (220) et le serveur d'authentification (220) reçoit l'information d'authentification de la part du terminal (10) auquel l'identifiant prédéterminé d'abonné au réseau (50) a été affecté et auquel la pluralité des jeux de données d'authentification (60) a été transférée.

2. Procédé selon la revendication 1, **caractérisé par** l'autre étape de
- authentification (S3) du terminal (10) vis-à-vis du serveur d'assistance d'accès (100) avant l'étape de l'affectation (S4) de l'identifiant prédéterminé d'abonné au réseau (50) au terminal (10).

3. Procédé selon la revendication 1 ou 2, **caractérisé en ce que**, pour l'étape de la vérification (G4) de l'information d'authentification du terminal (10), le premier serveur (210) met à la disposition du serveur d'authentification (220) au moins le jeu de données d'authentification (62) sélectionné.

4. Procédé selon la revendication 1 ou 2, **caractérisé en ce que**, pour l'étape de la vérification (G4) de l'information d'authentification du terminal (10), le serveur d'assistance d'accès (100) met à la disposition du serveur d'authentification (220) au moins le jeu de données d'authentification (62) sélectionné.

5. Procédé selon la revendication 4, **caractérisé en ce que** le serveur d'assistance d'accès (100) reconnaît à l'aide de l'identifiant prédéterminé d'abonné au réseau (50) une demande d'authentification du terminal (10) auprès d'un réseau de téléphonie mobile (200; 300), et à la suite de cela, pour l'étape de la vérification (G4) de l'information d'authentification du terminal (10), met le jeu de données d'authentification (62) sélectionné à la disposition d'un serveur d'authentification (220; 320) du réseau de téléphonie mobile (200; 300) en tant que le serveur d'authentification.

6. Procédé selon la revendication 5, **caractérisé en ce que** le serveur d'assistance d'accès (100) reconnaît à l'aide de l'identifiant prédéterminé d'abonné au réseau (50) une demande d'authentification du terminal (100) auprès d'un réseau domestique (200), et à la suite de cela, pour l'étape de la vérification (G4) de l'information d'authentification du terminal (10), met le jeu de données d'authentification (62) sélectionné à la disposition du serveur d'authentification (220) du réseau domestique (200).

7. Procédé selon la revendication 5, **caractérisé en ce que** le serveur d'assistance d'accès (100) reconnaît à l'aide de l'identifiant prédéterminé d'abonné au réseau (50) une demande d'authentification du terminal (10) auprès d'un réseau étranger (300), et à la suite de cela, pour l'étape de la vérification (G4) de l'information d'authentification du terminal (10), met le jeu de données d'authentification (62) sélectionné à la disposition du serveur d'authentification (320) du réseau étranger (300).

8. Procédé selon la revendication 1 ou 2, **caractérisé en ce que** le serveur d'assistance d'accès (100) fait office d'unité de personnalisation pour un terminal (10) et affecte au terminal (10) à l'étape de l'affectation (S4) un identifiant temporaire initial d'abonné au réseau, le premier serveur (210) génère une pluralité de jeux de données d'authentification initiaux pour l'identifiant temporaire initial d'abonné au réseau, et le terminal fait, lors d'une première mise en service dans un réseau de téléphonie mobile, une première demande d'authentification auprès du réseau de téléphonie mobile sur la base de l'identifiant temporaire initial d'abonné au réseau et des jeux de données d'authentification initiaux.

9. Procédé selon une des revendications de 1 à 8, **caractérisé en ce que** le premier serveur (210) du réseau de téléphonie mobile (200) est un serveur d'un registre de lieu d'origine du réseau de téléphonie mobile (200).

10. Procédé selon une des revendications de 1 à 9, **caractérisé en ce que**, en tant qu'un jeu de données d'authentification (60), une paire de jeux de données consistant en un index et en une valeur de vérification associée à l'index est générée.

11. Elément de sécurité (20) pour un terminal (10) avec application d'assistance d'accès (30) pour l'assistance de l'accès à au moins un réseau de téléphonie mobile (200; 300), cependant que l'utilisation du réseau de téléphonie mobile (200; 300) est réglée par un abonnement,
cependant que l'application d'assistance d'accès (30) est équipée pour
- effectuer une authentification de l'élément de sécurité (20) vis-à-vis d'un serveur d'assistance d'accès (100),
- de la part du serveur d'assistance d'accès (100), recevoir et gérer de manière sécurisée un identifiant d'abonné au réseau (50) associé pour la durée de l'abonnement et une pluralité de jeux de données d'authentification (60) relatives à cet identifiant d'abonné au réseau (50) ; et
- à l'aide d'un indice reçu par un serveur d'authentification (220, 320) du réseau de téléphonie mobile (200, 300), déterminer à partir de la pluralité des jeux de données d'authentification (60) un jeu de données d'authentification (62) correspondant,
- sur la base de l'identifiant associé d'abonné au réseau (50) et du jeu de données d'authentification (62) appartenant à d'index, authentifier l'élément de sécurité (20) vis-à-vis d'un réseau de téléphonie mobile (200; 300).

12. Elément de sécurité (20) selon la revendication 11, **caractérisé en ce que** l'application d'assistance d'accès (30) est équipée pour, de la part du serveur d'assistance d'accès (100), recevoir et gérer de manière sécurisée plusieurs identifiants différents d'abonné au réseau (50; 50') et, pour chacun de ces différents identifiants d'abonné au réseau (50; 50'), respectivement une pluralité de jeux de données d'authentification (60; 60'), et est équipée pour s'authentifier vis-à-vis de plusieurs réseaux différents de téléphonie mobile (200; 300), sur la base de ces différents identifiants d'abonné au réseau (50; 50') et de la pluralité de jeux de données d'authentification (60; 60') respectivement associées aux différents identifiants d'abonné au réseau (50; 50').

13. Serveur d'assistance d'accès (100) pour l'assistance d'un élément de sécurité (20) lors de l'accès à un réseau de téléphonie mobile (200; 300), cependant que l'utilisation du réseau de téléphonie mobile (200; 300) est réglée par un abonnement, cependant que le serveur d'assistance d'accès (100) est équipé pour
- être relié à un premier serveur (210) du réseau de téléphonie mobile (200) ;
- authentifier un élément de sécurité (20) d'un terminal (10) ;
- associer à l'élément de sécurité (20), pour la durée de l'abonnement, un identifiant d'abonné au réseau (50), et transférer au premier serveur (210) l'identifiant d'abonné au réseau (50) ;
- de la part du premier serveur (210), recevoir une pluralité de jeux de données d'authentification (60) relatifs à cet identifiant d'abonné au réseau (50), et
- transférer la pluralité des jeux de données d'authentification (60) conjointement avec l'identifiant associé d'abonné au réseau (50) à l'élément de sécurité (20) du terminal (10).

14. Serveur d'assistance d'accès (100) selon la revendication 13, **caractérisé en ce que** le serveur d'assistance d'accès (100) est équipé pour associer à l'élément de sécurité (20) différents identifiants d'abonné au réseau (50; 50') et pour transférer respectivement un des différents identifiants d'abonné au réseau (50; 50') à un premier serveur (210) d'un réseau de téléphonie mobile (200) parmi une quantité de différents réseaux de téléphonie mobile (200; 300), et est équipé pour transmettre à l'élément de sécurité (20) du terminal (10) une pluralité, respectivement reçue par un des premiers serveurs (210) relativement à l'identifiant d'abonné au réseau (50) transféré au premier serveur (210), de jeux de données d'authentification (60) conjointement avec l'identifiant d'abonné au réseau (50) transféré au premier serveur (210).

15. Système (1000) comprenant un réseau de téléphonie mobile (200; 300), un élément de sécurité (20) pour un terminal (10) selon la revendication 11 ou 12 ainsi qu'un serveur d'assistance d'accès (100) selon la revendication 13 ou 14, lequel est équipé pour effectuer un procédé selon une des revendications de 1 à 10.
